# FASCICULE DE BREVET EUROPEEN

(11) **EP 2 858 838 B1**
(45) Date de publication et mention de la délivrance du brevet: **13.07.2016**
(21) Numéro de dépôt: 13730006.7
(22) Date de dépôt: 30.05.2013
(51) Int. Cl.: B60G 7/00, B62D 65/12, B21D 53/88

(54) **BRAS DE SUSPENSION D'UNE ROUE A LA CAISSE D'UN VEHICULE AUTOMOBILE AVEC RENFORT CONTINU**
ARM ZUR AUFHÄNGUNG EINES RADES EINER KAROSSERIE EINES KRAFTFAHRZEUGS MIT KONTINUIERLICHER VERSTÄRKUNG
ARM FOR SUSPENDING A WHEEL FROM THE BODY OF A MOTOR VEHICLE WITH CONTINUOUS REINFORCEMENT

(30) Priorité: 11.06.2012 FR 1255434
(43) Date de publication de la demande: 15.04.2015
(73) Titulaire: Peugeot Citroën Automobiles SA, 78140 Vélizy Villacoublay (FR)
(72) Inventeur: CADET, Bruno, F-25700 Valentigney (FR)
(74) Mandataire: Rosenberg, Muriel Sylvie
(86) Numéro de dépôt international: PCT/FR2013/051208
(87) Numéro de publication internationale: WO 2013/186456

(56) Documents cités:
- EP-A1- 0 987 344
- EP-A1- 1 992 710
- EP-A2- 1 167 092
- WO-A1-2004/002761
- WO-A1-2004/065146
- WO-A1-2010/066226
- DE-A1-102004 009 722
- DE-A1-102009 008 839
- FR-A1- 2 614 000
- FR-A1- 2 882 692
- JP-A- 9 019 736
- JP-A- 59 213 508
- JP-A- 2000 335 216
- JP-A- 2000 355 206
- JP-A- 2001 073 056
- US-A1- 2009 000 705
- US-A1- 2011 198 821

## Description

La présente invention concerne un bras de suspension d'une roue à la caisse d'un véhicule automobile formant un triangle avant, fixé à la caisse en deux points voisins et en un troisième point au support de roue, les trois axes de fixation étant parallèles entre eux, le triangle avant présentant des renforts comportant au moins une excroissance orientée perpendiculairement au plan du triangle avant et s'étendant essentiellement entre les deux points de fixation les plus éloignés l'un de l'autre.

Le document US 2009/0000705 A décrit un bras de suspension d'une roue à la caisse d'un véhicule automobile tel que décrit ci-dessus. Ce bras de suspension comprend des profils renforcés par des excroissances en forme de H permettant d'améliorer la rigidité de l'ensemble et une densité de particules de renfort plus importante au niveau des zones soumises à de fortes contraintes.

Un des objectifs actuel à atteindre dans l'industrie automobile consiste à tout mettre en oeuvre pour réduire le poids du véhicule afin de réduire sa consommation en carburant. Ceci concerne aussi bien entendu des pièces constituant la suspension des roues d'un véhicule.

En ce qui concerne ces pièces il convient également de réduire le coût de leur fabrication. Il faut noter que la fabrication desdites pièces avec une densité de particules localement différente ne va pas dans ce sens.

C'est donc le but de la présente invention de proposer un bras de suspension d'une roue à la caisse d'un véhicule automobile avec renfort, qui soit facile à fabriquer avec un minium de poids tout en respectant les exigences de tenue physique en termes d'endurance et de raideur dans les cas extrêmes.

Dans ce but, la présente invention propose un bras de suspension d'une roue à la caisse d'un véhicule automobile formant un triangle avant, fixé à la caisse en deux points voisins et en un troisième point au support de roue, les trois axes de fixation étant parallèles entre eux, le triangle avant présentant des renforts comportant au moins une excroissance orientée perpendiculairement au plan du triangle avant et s'étendant essentiellement entre les deux points de fixation les plus éloignés l'un de l'autre, dans lequel les dimensions d'un renfort varient localement en continu le long de son extension en fonction de la répartition des contraintes physiques locales en mode de fonctionnement.

Le triangle avant présente essentiellement la forme d'un bras coudé avec des points de fixation à ses extrémités et au coude, un renfort étant agencé le long du bord latéral du côté de la roue et en option un deuxième renfort étant prévu au bord latéral lui faisant face.

La hauteur de la première excroissance du renfort est essentiellement constante entre le point de fixation de la roue et le coude et la hauteur de la seconde excroissance du renfort diminue en continu entre le coude et le point de fixation à l'extrémité du bras opposé.

Avantageusement, le triangle avant est une pièce monobloc en acier ou aluminium ou en un alliage réalisée par une technique de forgeage ou par moulage.

La largeur du renfort peut être essentiellement constante le long de son extension.

La hauteur et/ou la largeur du renfort peut/ou peuvent être variables en fonction de la répartition des contraintes physiques en mode de fonctionnement.

Avantageusement, les dimensions locales dudit renfort sont calculées de telle sorte que la masse du triangle soit réduite au maximum tout en répondant également aux exigences de tenue physique sans augmenter la masse dudit triangle

D'autres caractéristiques et avantages de l'invention apparaîtront à la lecture d'un exemple de réalisation d'un bras de suspension selon l'invention, donné à titre non limitatif, en se référant aux figures en annexe, dans lesquels:
- La Fig. 1 est une vue en perspective d'un mode de réalisation d'un bras de suspension d'une roue à la caisse d'un véhicule automobile formant un triangle avant selon l'invention ; et
- La Fig. 2 est une vue en perspective d'un bras de suspension selon l'état de la technique.

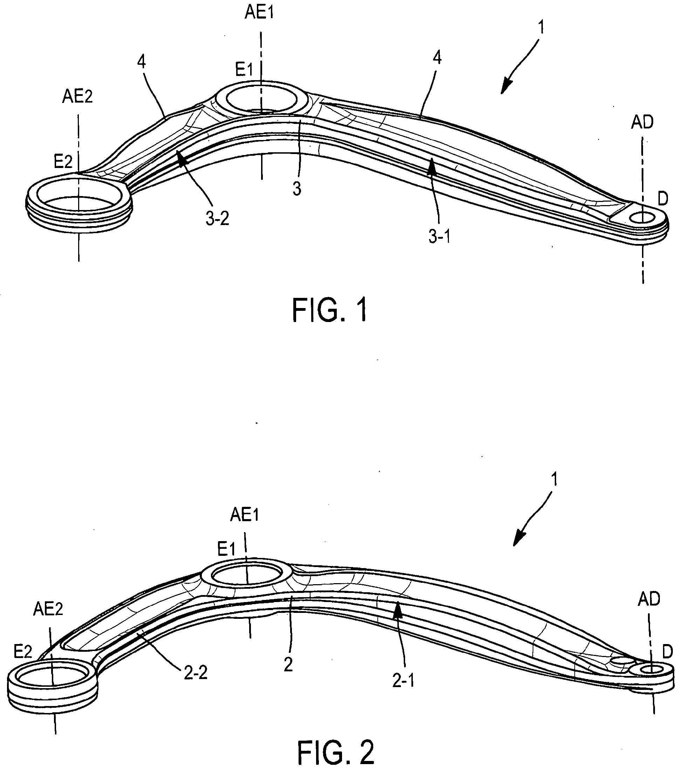

En se référant à la Fig. 2, un bras de suspension 1 formant un triangle avant d'un véhicule automobile comprend trois points de fixation E1, E2 et D. Aux points de fixation E1 et E2, le triangle avant est fixé à la caisse et le point de fixation D sert à la fixation d'une roue avant du véhicule. Le bras de suspension présente essentiellement la forme d'un bras coudé avec le point de fixation E1 situé au coude. Un renfort 2 se présentant sous la forme d'une excroissance 2-1 perpendiculaire au plan du triangle avant s'étend essentiellement entre le point de fixation D de la roue et le point de fixation au coude E1. Entre le point de fixation E1 et le point de fixation E2, la hauteur de cette excroissance 2-2 est réduite à une valeur proche de zéro.

Toutefois les expériences sur un tel triangle avant ont démontré que le renfort côté roue était soumis à plus d'efforts en raison des contraintes physiques spécifiques au véhicule lors de son fonctionnement. Ainsi, la densité d'énergie pendant ces contraintes est considérable aux emplacements soumis aux efforts et aussi entre les deux points de fixation E1 et E2 et c'est ce phénomène qui a conduit à développer des pièces permettant d'harmoniser cette répartition d'énergie locale plus régulièrement.

Comme on peut le voir sur la Fig. 1 on a changé la forme du renfort 3 de manière à couvrir aussi le bord latéral côté roue entre les deux points de fixation E1 et E2 sans trop augmenter la masse du triangle avant.

Dans ce but, la première excroissance 3-1 formant le renfort 3 s'étend essentiellement avec une hauteur constante entre le point de fixation D et le point de fixation E1 au coude et la hauteur de la seconde excroissance 3-2 diminue en continu entre le point de fixation E1 au coude et le point de fixation E2. De la sorte on répond mieux aux exigences de tenue physique que dans le cas décrit dans l'état de la technique avec un apport minime de matériau.

La Fig. 1 montre un deuxième renfort 4 prévu selon ce mode de réalisation sur le bord latéral opposé. Il peut présenter la même forme que le renfort côté roues ou une autre forme, par exemple moins volumineuse car les efforts développés sur ce bord latéral sont moins importants que ceux développés sur le bord côté roue, comme le démontrent les expériences effectuées.

Le triangle avant selon l'invention permet d'améliorer le comportement du véhicule en augmentant la raideur du triangle sans trop augmenter la masse du composant. En effet lors des essais on a pu constater une amélioration de la raideur d'une droite reliant les points de fixation E1 et E2 d'environ 31 % et la raideur dans une direction perpendiculaire à cette droite est augmentée d'environ 35 %.

## Revendications

1. Bras de suspension (1) d'une roue à la caisse d'un véhicule automobile formant un triangle avant, fixé à la caisse en deux points (E1, E2) voisins et en un troisième point (D) au support de roue, les trois axes de fixation (AE1, AE2, AD) étant parallèles entre eux, le triangle avant présentant des renforts (2,3) comportant au moins une excroissance orientée perpendiculairement au plan du triangle avant et s'étendant essentiellement entre les deux points de fixation (E2, D) les plus éloignés l'un de l'autre, **caractérisé en ce que** les dimensions d'au moins un renfort (3) varient localement en continu le long de son extension en fonction de la répartition des contraintes physiques locales en mode de fonctionnement, **en ce que** le triangle avant présente essentiellement la forme d'un bras coudé avec des points de fixation (E2, D) à ses extrémités et au coude (E1), un renfort (3) étant agencé le long du bord latéral du côté de la roue et en option un deuxième renfort (4) étant prévu au bord latéral lui faisant face et **en ce que** la hauteur de la première excroissance (3-1) du renfort (3) est essentiellement constante entre le point de fixation (D) de la roue et le coude (E1) et la hauteur de la seconde excroissance (3-2) du renfort (3) diminue en continu entre le coude (E1) et le point de fixation (E2) à l'extrémité du bras opposé.

2. Bras de suspension selon la revendication 1, **caractérisé en ce que** le triangle avant est une pièce monobloc en acier ou aluminium ou en un alliage réalisée par une technique de forgeage ou par moulage.

3. Bras de suspension selon l'une quelconque des revendications précédentes, **caractérisé en ce que** la largeur d'au moins un renfort (3, 4) est essentiellement constante le long de son extension.

4. Bras de suspension selon l'une quelconque des revendications 1 ou 2, **caractérisé en ce que** la hauteur et/ou la largeur du renfort (3, 4) sont localement variables en fonction de la répartition des contraintes physiques qui s'exercent en mode de fonctionnement.

## Patentansprüche

1. Aufhängungsarm (1) eines Rads an der Karosserie eines Kraftfahrzeugs, der ein vorderes Dreieck bildet, das an der Karosserie an zwei benachbarten Stellen (E1, E2) und an einer dritten Stelle (D) an dem Radträger befestigt ist, wobei die drei Befestigungsachsen (AE1, AE2, AD) zueinander parallel sind, wobei das vordere Dreieck Verstärkungen (2, 3) aufweist, die mindestens eine Ausstülpung umfassen, die senkrecht zu der Ebene des vorderen Dreiecks ausgerichtet ist und sich im Wesentlichen zwischen den zwei Befestigungsstellen (E2, D) befindet, die voneinander am weitesten entfernt sind, **dadurch gekennzeichnet, dass** die Abmessungen mindestens einer Verstärkung (3) lokal kontinuierlich entlang ihrer Ausdehnung in Abhängigkeit von der Verteilung der lokalen physischen Belastungen im Betriebsmodus variieren, dass das vordere Dreieck im Wesentlichen die Form eines abgewinkelten Arms mit Befestigungspunkten (E2, D) an seinen Enden und an dem Winkel (E1) aufweist, wobei eine Verstärkung (3) entlang des seitlichen Rands der Seite des Rads eingerichtet ist, und optional eine zweite Verstärkung (4) an dem seitlichen Rand, der ihr gegenüberliegt, vorgesehen ist, und dass die Höhe der ersten Ausstülpung (3-1) der Verstärkung (3) im Wesentlichen zwischen der Befestigungsstelle (D) des Rads und dem Winkel (E1) konstant ist, und die Höhe der zweiten Ausstülpung (3-2) der Verstärkung (3) laufend zwischen dem Winkel (E1) und der Befestigungsstelle (E2) an dem Ende des entgegengesetzten Arms abnimmt.

2. Aufhängungsarm nach Anspruch 1, **dadurch gekennzeichnet, dass** das vordere Dreieck ein einteiliges Teil aus Stahl oder Aluminium oder aus einer Legierung ist, das durch eine Schmiedetechnik oder Formen hergestellt wird.

3. Aufhängungsarm nach einem der vorhergehenden Ansprüche, **dadurch gekennzeichnet, dass** die Breite mindestens einer Verstärkung (3, 4) im Wesentlichen entlang ihrer Ausdehnung konstant ist.

4. Aufhängungsarm nach einem der Ansprüche 1 oder 2, **dadurch gekennzeichnet, dass** die Höhe und/oder die Breite der Verstärkung (3, 4) stellenweise in Abhängigkeit von der Verteilung der physischen Belastungen, die im Betriebsmodus ausgeübt werden, variabel sind.

## Claims

1. An arm (1) for suspending a wheel from the body of a motor vehicle, forming a front triangle, attached to the body at two adjacent points (E1), (E2) and to the wheel support at a third point (D), the three attachment axes (AE1, AE2, AD) being parallel, the front triangle having reinforcements (2,3) comprising at least one protrusion perpendicularly oriented to the plane of the front triangle and extending essentially between the two attachment points (E2, D) that are the furthest away from each other, **characterized in that** the dimensions of at least one reinforcement (3) vary locally continuously along the extension thereof according to the distribution of the local physical stresses in the operating mode, that the front triangle has essentially the shape of a bent arm with attachment points (E2, D) at its ends and at the bend (E1), a reinforcement (3) being arranged along the lateral edge of the side of the wheel and optionally a second reinforcement (4) being provided at the lateral edge opposite it and **in that** the height of the first protrusion (3-1) of the reinforcement (3) is essentially constant between the attachment point (D) of the wheel and the bend (E1) and the height of the second protrusion (3-2) of the reinforcement (3) reduces continuously between the bend (E1) and the attachment point (E2) at the end of the opposite arm.

2. The arm for suspending according to Claim 1, **characterized in that** the front triangle is a single-unit piece made of steel or aluminium or of an alloy realized by a forging technique or by casting.

3. The arm for suspending according to any one of the preceding claims, **characterized in that** the width of at least one reinforcement (3, 4) is essentially constant along its extension.

4. The arm for suspending according to any one of Claims 1 or 2, **characterized in that** the height and/or the width of the reinforcement (3, 4) are locally variable as a function of the distribution of the physically stresses which are exerted in the operating mode.
